# EUROPEAN PATENT APPLICATION

(11) **EP 4 674 600 A1**
(43) Date of publication of application: **07.01.2026**
(21) Application number: 24763207.8
(22) Date of filing: 28.02.2024
(51) Int. Cl.: B29C 64/393, B33Y 50/02, B22F 10/366

(54) **MULTI-LASER SCANNING CONTROL METHOD AND APPARATUS, DEVICE, AND COMPUTER STORAGE MEDIUM**

(30) Priority: 28.02.2023 CN 202310179155
(71) Applicant: Xi'an Bright Laser Technologies Co., Ltd., Xi'an, Shaanxi 710000 (CN)
(72) Inventor: YANG, Donghui, Xi' an, Shaanxi 710000 (CN); YUAN, Zuopeng, Xi' an, Shaanxi 710000 (CN); NIU, Wen, Xi' an, Shaanxi 710000 (CN)
(74) Representative: Murgitroyd & Company
(86) International application number: PCT/CN2024/079087
(87) International publication number: WO 2024/179527

(57) **Abstract**

A multi-laser scanning control method includes: dividing, along a blowing direction, each forming area corresponding to one of a plurality of lasers into a plurality of logical sub-regions; planning a scanning order for the plurality of logical sub-regions within each forming area according to a predetermined scanning order determination rule; and controlling each laser to sequentially scan the plurality of logical sub-regions within its corresponding forming area according to the scanning order until scanning of the forming areas corresponding to the plurality of lasers is completed.

## Description

### CROSS-REFERENCE TO RELATED APPLICATIONS

This application claims the priority of Chinese Patent Application No. 202310179155.5, filed with the China National Intellectual Property Administration on February 28, 2023, entitled "MULTI-LASER SCANNING CONTROL METHOD, APPARATUS, DEVICE, AND COMPUTER STORAGE MEDIUM", the entire content of which is incorporated herein by reference.

### TECHNICAL FIELD

The present disclosure relates to additive manufacturing and more particularly to a multi-laser scanning control method, apparatus, device, and computer storage medium.

### BACKGROUND

Metal additive manufacturing technology achieves the part forming by adding material, which may quickly, directly, and accurately transform design ideas into physical models with certain functions.

Parts manufactured using metal additive manufacturing may replace parts produced by traditional processing, this technology may shorten the product design and manufacturing cycles, enhance enterprise competitiveness, increase profitability, and provide industrial product designers with a completely new product development model.

Compared with traditional processing methods, metal additive manufacturing may form parts of any complex shape, and the mechanical properties of the formed parts are superior to those of traditionally manufactured parts.

The process of forming parts using Selective Laser Melting (SLM) technology is as follows: a powder spreading system lays a layer of powder material evenly on the upper surface of a previously formed part or on a substrate; an optical path system scans the cross-sectional profile of this powder layer to sinter it, and bonding it with the previously formed portion or the substrate; after one layer of powder material is sintered, a motion system drives the forming platform to descend, and the powder spreading system lays a new layer of powder material on the sintered layer for sintering, and repeating this process until the entire part is printed. During the entire forming process, an airflow system is configured to blow away the fumes and residues generated by laser sintering, to avoid affecting the forming quality.

For SLM equipment configured with multiple lasers, multiple lasers scan simultaneously during the forming process, and when the forming area is large, the fumes generated by upwind lasers during scanning may, on one hand, affect the absorption rate of the laser beam emitted by downwind lasers, thereby affecting the forming quality; on the other hand, when some fume particles are relatively large, these particles may fall into the downwind area, further affecting the forming quality of parts in that area.

Therefore, under normal blowing conditions, multiple lasers often cannot operate simultaneously. In other words, to prevent the airflow from blowing fumes and metal sintering residues generated during the forming process into the areas being formed, only one laser can operate along the blowing direction during the forming process, resulting in low laser utilization and a relative reduction in part forming efficiency.

### SUMMARY

The present disclosure provides a multi-laser scanning control method, apparatus, device, and computer storage medium, capable of achieving high-quality and high-efficiency part manufacturing even under fully counterflow conditions.

The technical solution of the present disclosure is implemented as follows.

In a first aspect, the present disclosure provides a multi-laser scanning control method, which includes: dividing, along a blowing direction, each forming area corresponding to one of a plurality of lasers into a plurality of logical sub-regions; planning a scanning order for the plurality of logical sub-regions within each forming area according to a predetermined scanning order determination rule; and controlling each laser to sequentially scan the plurality of logical sub-regions within its corresponding forming area according to the scanning order until scanning of the forming areas corresponding to the plurality of lasers is completed.

In a second aspect, the present embodiment provides a multi-laser scanning control apparatus, which includes: a division unit, a planning unit, and a scanning control unit; wherein, the division unit is configured to divide, along a blowing direction, each forming area corresponding to one of a plurality of lasers into a plurality of logical sub-regions; the planning unit is configured to plan a scanning order for the plurality of logical sub-regions within each forming area according to a predetermined scanning order determination rule; and the scanning control unit is configured to control each laser to sequentially scan the plurality of logical sub-regions within its corresponding forming area according to the scanning order until scanning of the forming areas corresponding to the plurality of lasers is completed.

In a third aspect, the present embodiment provides a multi-laser scanning control device, which includes: a communication interface, a memory, and a processor; the components are coupled together via a bus system; wherein, the communication interface is configured to receive and transmit signals during the process of exchanging information with other external network elements; the memory is configured to store a computer program that may run on the processor; and the processor is configured to execute the steps of the multi-laser scanning control method of the first aspect when running the computer program.

In a fourth aspect, the present embodiment provides a computer storage medium, which stores a program for multi-laser scanning control; when the program is executed by at least one processor, the steps of the multi-laser scanning control method of the first aspect are implemented.

The present embodiment provides a multi-laser scanning control method, apparatus, device, and computer storage medium; the forming area corresponding to each of the multiple lasers is divided into multiple logical sub-regions along a direction parallel to the blowing direction; then, according to a predetermined scanning order determination rule, the scanning order of each logical sub-region in the counterflow direction is planned, and the corresponding lasers are controlled to sequentially scan the logical sub-regions according to the obtained counterflow scanning order until the scanning of all forming areas corresponding to the lasers is completed.

By planning the counter-wind scanning paths of multiple logical sub-regions, on one hand, it ensures fully counter-wind scanning among multiple lasers, avoiding mutual interference between upwind and downwind lasers during the forming process, thereby ensuring the quality of the fabricated parts; on the other hand, it reduces the waiting time of multiple lasers during the forming process, improving the forming efficiency.

### BRIEF DESCRIPTION OF THE DRAWINGS

To more clearly illustrate the embodiments of the present disclosure, the accompanying drawings used in the description of the embodiments are briefly introduced below. The accompanying drawings described below are merely exemplary embodiments of the present disclosure.
FIG. 1 is a schematic diagram illustrating the positional layout of multiple lasers provided in one embodiment of the present disclosure.
FIG. 2 is a flowchart illustrating a multi-laser scanning control method provided in an embodiment of the present disclosure.
FIG. 3 is a schematic diagram illustrating the positional layout of multiple lasers provided in another embodiment of the present disclosure.
FIG. 4 is a schematic diagram illustrating the division of the forming areas corresponding to the multiple lasers in FIG. 3.
FIG. 5 is a schematic diagram illustrating the positional layout of multiple lasers provided in another embodiment of the present disclosure.
FIG. 6 is a schematic diagram illustrating the division of the forming areas corresponding to the multiple lasers in FIG. 5.
FIG. 7 illustrates the scanning order of multiple logical sub-regions provided in one embodiment of the present disclosure.
FIG. 8 illustrates the scanning order of multiple logical sub-regions provided in another embodiment of the present disclosure.
FIG. 9 is a schematic diagram illustrating the scanning order among multiple logical sub-regions having upwind and downwind relationships in an embodiment of the present disclosure.
FIG. 10 is a schematic diagram illustrating the scanning order of each part within each logical sub-region in an embodiment of the present disclosure.
FIG. 11 is a schematic diagram illustrating the components of a multi-laser scanning control apparatus provided in an embodiment of the present disclosure.
FIG. 12 is a schematic diagram illustrating the specific hardware structure of a multi-laser scanning control device provided in an embodiment of the present disclosure.

### DETAILED DESCRIPTION OF THE EMBODIMENTS

In order to make the objectives, technical solutions, and advantages of the present disclosure more apparent, the exemplary embodiments of the present disclosure will be described in detail below with reference to the accompanying drawings. It is apparent that the described embodiments are merely part of the embodiments of the present disclosure, but not all of them, and the present disclosure is not limited to the exemplary embodiments described herein.

To solve the problem of interference between upwind and downwind forming areas when multiple lasers are simultaneously emitting in an SLM equipment, conventional technical solutions often adopt a single-row scanning method. That is, the forming areas covered by the row of lasers farthest from the blowing direction are scanned first. During this scanning, the other rows of lasers remain in a waiting state, and after the parts in the forming areas covered by that row are completely scanned, the next adjacent row of lasers begins scanning. This process continues until the entire forming area is scanned. Although this scanning method avoids interference from the fumes and residues generated by laser sintering from upwind forming areas affecting downwind forming areas during laser forming, the upwind lasers have long waiting times, resulting in low utilization efficiency.

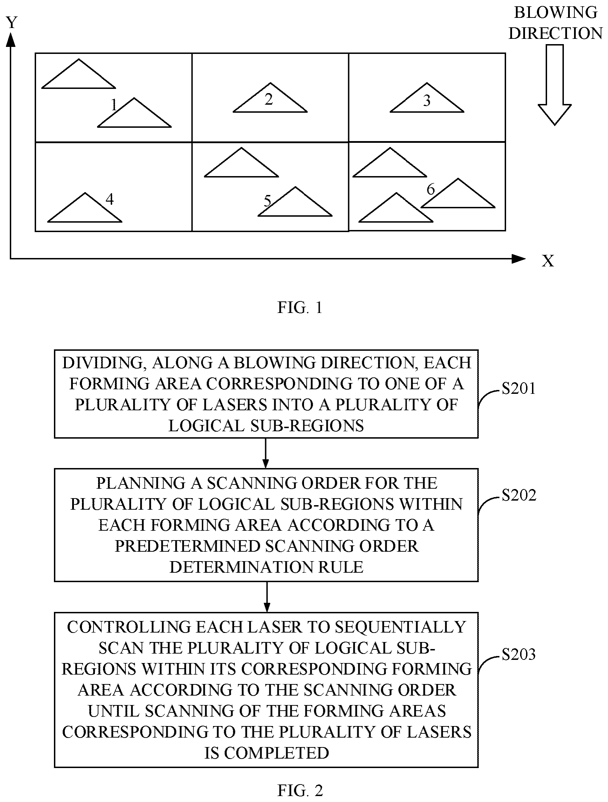

Specifically, in the multi-laser layout shown in FIG. 1, to achieve fully counter-wind printing and avoid fumes generated in the upwind forming areas from affecting the downwind forming areas, lasers 4, 5, and 6 first scan their corresponding forming areas. Only after the forming areas corresponding to lasers 4, 5, and 6 are fully scanned and sintered may lasers 1, 2, and 3 begin scanning their respective forming areas. It is understandable that during this forming process, the lasers have waiting times, resulting in low laser utilization, which improves forming quality but lowers forming efficiency. It should be noted that multiple parts to be formed (triangles in FIG. 1) are arranged within each forming area corresponding to a laser (rectangles in FIG. 1).

Based on this, the present embodiment aims to provide a high-efficiency, high-quality multi-laser scanning path planning technical solution -one that may effectively reduce the impact of fumes and residues generated during laser sintering on part quality under fully counter-wind scanning-for multi-laser additive manufacturing devices, which may ensure high-quality forming of parts, while also improving forming efficiency and laser utilization.

Referring to FIG. 2, it illustrates a multi-laser scanning control method provided in the present embodiment, which specifically includes:
S201, dividing, along a blowing direction, each forming area corresponding to one of a plurality of lasers into a plurality of logical sub-regions;
S202, planning a scanning order for the plurality of logical sub-regions within each forming area according to a predetermined scanning order determination rule; and
S203, controlling each laser to sequentially scan the plurality of logical sub-regions within its corresponding forming area according to the scanning order until scanning of the forming areas corresponding to the plurality of lasers is completed.

In the technical solution shown in FIG. 2, in the specific implementation, the forming areas corresponding to multiple lasers are first divided into multiple logical sub-regions in a direction parallel to the blowing direction. Then, by using the predetermined scanning order determination rule, the counter-wind scanning order corresponding to each logical sub-region is planned, and the corresponding lasers are controlled to sequentially scan the multiple logical sub-regions according to the obtained counter-wind scanning order until all forming areas corresponding to the lasers are scanned. By planning the counter-wind scanning paths of multiple logical sub-regions, the counter-wind scanning between multiple lasers is fully ensured, avoiding mutual interference between upwind and downwind lasers during the forming process, ensuring part quality, while also reducing the waiting time of multiple lasers, thereby improving forming efficiency.

It should be noted that the counter-wind scanning involved in the present embodiment includes: scanning in a direction parallel to and opposite the blowing direction; scanning along a direction perpendicular to the blowing direction from one side of the current logical sub-region to the corresponding opposite side; of course, scanning in a direction opposite to the blowing direction and at a certain inclined angle with the blowing direction from one side of the current logical sub-region to the corresponding opposite side also falls within the scope of protection of the present embodiment.

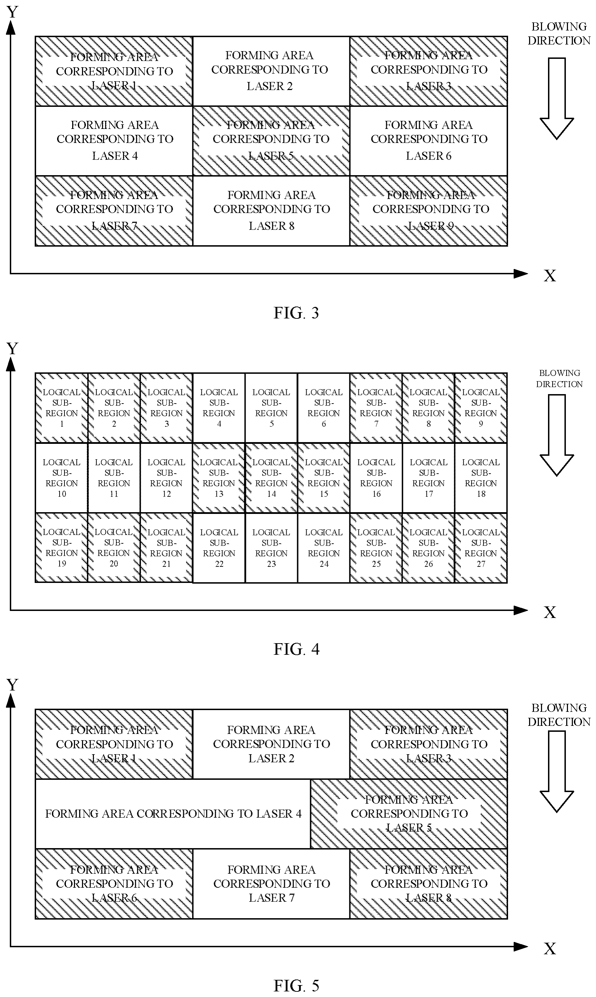

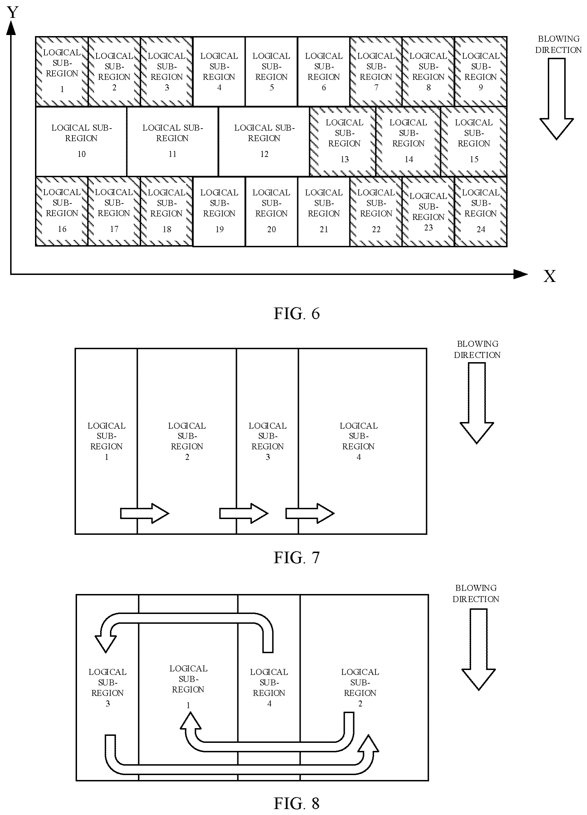

Furthermore, it is appreciable that in the specific implementation, the forming areas of multiple lasers are divided into C (number of logical sub-regions) logical sub-regions in a direction parallel to the blowing direction, herein C ≥ 1 and is an integer. It should be noted that the forming areas corresponding to the lasers may be divided uniformly or non-uniformly, such as the division methods shown in FIGS. 3 to 6. Specifically, FIG. 3 illustrates that when the SLM equipment is equipped with nine lasers, the forming areas corresponding to these nine lasers are uniformly divided, and the result is shown in FIG. 4. FIG. 5 illustrates that when the SLM equipment is equipped with eight lasers, the forming areas corresponding to these eight lasers are uniformly divided, and the result is shown in FIG. 6.

In some possible embodiments of the technical solution shown in FIG. 2, the predetermined scanning order determination rules include:
For the scanning order determination rule among multiple logical sub-regions of each laser:
Among the multiple logical sub-regions included in each laser, numbering is performed sequentially or randomly starting from any logical sub-region, and scanning is performed sequentially according to the numbering from small to large or from large to small.

For the scanning order determination rule between adjacent lasers:
When there is no upwind-downwind relationship between the forming areas corresponding to adjacent lasers, no scanning order is set among the multiple logical sub-regions included in the adjacent lasers;
When there is an upwind-downwind relationship between the forming areas corresponding to adjacent lasers, the logical sub-regions in the downwind direction are scanned prior to the logical sub-regions in the upwind direction.

For the determination rule of part scanning order within each logical sub-region:
The scanning order of parts within each logical sub-region is the counter-wind scanning order.

It is understandable that, in the specific implementation process, for each laser, when its corresponding forming area is divided into multiple logical sub-regions, the numbering of the multiple logical sub-regions may start from any logical sub-region in order as shown in FIG. 7, or may be randomly numbered starting from any logical sub-region as shown in FIG. 8.

It should be noted that, based on the above numbering methods, regarding the scanning order among logical sub-regions for each laser, assuming a forming area corresponding to a laser is divided into four logical sub-regions, the scanning order of these four logical sub-regions may follow the order shown in FIG. 7: logical sub-region 1 → logical sub-region 2 → logical sub-region 3 → logical sub-region 4, or, according to FIG. 8, follow the order: logical sub-region 4 → logical sub-region 3 → logical sub-region 2 → logical sub-region 1. In other words, in the embodiments of the present disclosure, the scanning among logical sub-regions covered by each laser may start from any logical sub-region, and the scanning among multiple logical sub-regions may be sequential or intermittent.

On the other hand, it is understandable that, for lasers that do not have an upstream-downstream relationship, the logical sub-regions included in each laser are mutually independent. Therefore, the completion of scanning of a logical sub-region corresponding to one laser has no dependency on the logical sub-regions of another laser that does not have an upstream-downstream relationship. For lasers with an upstream-downstream relationship, the downstream logical sub-regions are scanned prior to the upstream logical sub-regions, i.e., logical sub-regions located downstream should be scanned before the upstream ones. Specifically, for any two logical sub-regions u and v, if logical sub-region u is located downstream of logical sub-region v, then logical sub-region u is scanned before logical sub-region v; conversely, if logical sub-region v is located downstream of logical sub-region u, then logical sub-region v is scanned before logical sub-region u. It is understandable that, in the embodiments of the present disclosure, there is no case where two logical sub-regions are mutually downstream of each other.

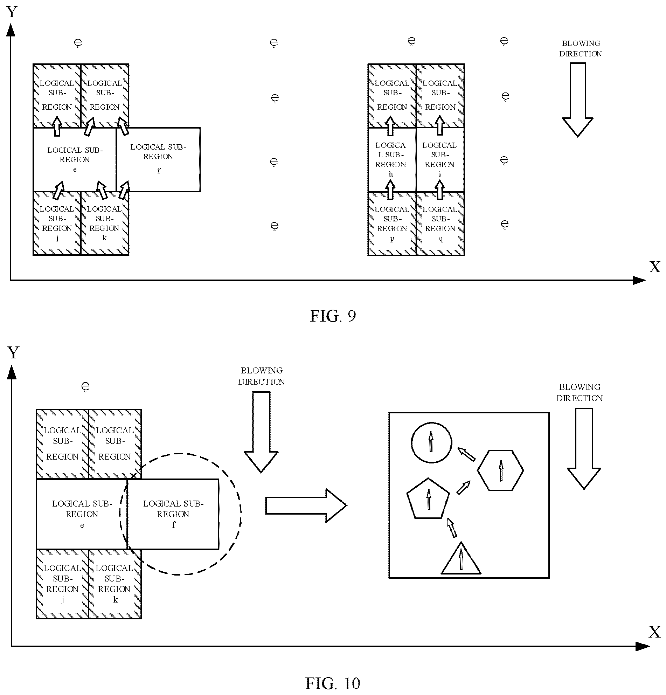

For example, in FIG. 9, for logical sub-region e, there exist two downstream logical sub-regions, j and k. Therefore, logical sub-region e should wait until both j and k are scanned before it can be scanned; for logical sub-region h, there is one downstream logical sub-region p, so logical sub-region h should wait until p is scanned before it can start scanning.

On another aspect, the scanning order within each logical sub-region strictly follows the counter-wind scanning direction. That is, within the coverage of each logical sub-region, the scanning direction of each part's sintering plane is opposite to the blowing direction, and the scanning among parts is also opposite to the blowing direction. Specifically, as shown in FIG. 10, taking logical sub-region f as an example, the scanning order of parts within f is: first scan triangular parts, then pentagonal parts, next hexagonal parts, and finally circular parts, with all parts scanned in the counter-wind direction opposite to the blowing direction.

In the above embodiment, in some examples, the upstream-downwind relationship between the forming areas includes:
If the projections of the forming areas corresponding to two lasers overlap along the blowing direction and the forming areas are adjacent, it is determined that an upstream-downwind relationship exists between the forming areas;
If the projections of the forming areas corresponding to two lasers overlap along the blowing direction but the forming areas are not adjacent, it is determined that no upstream-downwind relationship exists between the forming areas;
If the projections of the forming areas corresponding to two lasers do not overlap along the blowing direction, it is determined that no upstream-downwind relationship exists between the forming areas.

It is understandable that, as shown in FIG. 3, along the direction parallel to the blowing direction, the projection of the forming area of laser 1 overlaps with that of laser 4, and the two forming areas are adjacent, thus forming an upstream-downwind relationship: i.e., the forming area of laser 1 is upstream of that of laser 4, and the forming area of laser 4 is downstream of laser 1; the projection of laser 1's forming area overlaps with laser 7's forming area, but the two are not adjacent, so no upstream-downwind relationship exists; moreover, the projection of laser 1's forming area does not overlap with laser 8's forming area, so no upstream-downwind relationship exists.

In some possible embodiments of the technical solution shown in FIG. 2, the step of planning the scanning order of multiple logical sub-regions according to the predetermined scanning order determination rules includes:
Obtaining the priority scanning set for each logical sub-region according to the predetermined scanning order determination rules;
Planning the scanning order corresponding to each logical sub-region based on the priority scanning set of each logical sub-region, where logical sub-regions with an empty priority scanning set are scanned first.

In some examples, the priority scanning set of each logical sub-region is defined as the set of logical sub-regions that should be completed before scanning the respective logical sub-region.

It is understandable that, in the embodiments of the present disclosure, the priority scanning set of any logical sub-region is defined as the set of logical sub-regions that should be scanned before this logical sub-region. Considering that each logical sub-region is numbered, in practical implementation, the priority scanning set of any logical sub-region may be represented as a set of logical sub-region numbers that should be completed before scanning this logical sub-region. For example, in FIG. 9, the priority scanning set of logical sub-region e is {logical sub-region j, logical sub-region k}, and that of logical sub-region h is {logical sub-region p}; logical sub-region e should wait for j and k to finish scanning before it can start, and logical sub-region h should wait for p to finish.

Moreover, if a logical sub-region does not have any logical sub-region that should be scanned beforehand, its priority scanning set is empty. Any logical sub-region can only start scanning after all logical sub-regions in its priority scanning set are completed. Therefore, logical sub-regions with empty priority scanning sets are scanned first. In other words, when determining the scanning order, logical sub-regions corresponding to empty priority scanning sets are scanned first. After scanning is completed, the scanned logical sub-region is removed from the original priority scanning sets, and the priority scanning sets are updated to continue scanning logical sub-regions with empty priority scanning sets, until all logical sub-regions are scanned.

From the above embodiment, in some examples, controlling the corresponding lasers according to the scanning order to sequentially scan multiple logical sub-regions until the forming areas corresponding to multiple lasers are fully scanned includes:
Finding, among the multiple logical sub-regions, the logical sub-regions whose priority scanning sets are empty, and controlling the lasers corresponding to these logical sub-regions with empty priority scanning sets to begin scanning;
Removing the scanned logical sub-regions from the priority scanning sets to update the priority scanning sets;
Continuing to find, among the logical sub-regions to be scanned, the logical sub-regions whose updated priority scanning sets are empty, and controlling the corresponding lasers of these logical sub-regions with empty priority scanning sets to perform scanning;
And so on, until all the logical sub-regions have been scanned.

It is understandable that, as shown in FIG. 9, the priority scanning set of logical sub-region e is {logical sub-region j, logical sub-region k}, and the priority scanning set of logical sub-region h is {logical sub-region p}. Therefore, when logical sub-regions j and p are scanned, they are removed from the priority scanning sets that include them, updating the priority scanning set of logical sub-region e to {logical sub-region k} and the priority scanning set of logical sub-region h to an empty set. Consequently, in the next step, logical sub-region h is scanned with priority.

Specifically, taking FIG. 4 as an example, according to the scanning order rules for logical sub-regions, the priority scanning sets for each logical sub-region are formed as: 1→{10}, 2→{1, 11}, 3→{2, 12}, 4→{13}, 5→{4, 14}, 6→{5, 15}, 7→{16}, 8→{7, 17}, 9→{8, 18}, 10→{19}, 11→{10, 20}, 12→{11, 21}, 13→{22}, 14→{13, 23}, 15→{14, 24}, 16→{25}, 17→{16, 26}, 18→{17, 27}, 19→empty, 20→{19}, 21→{20}, 22→empty, 23→{22}, 24→{23}, 25→empty, 26→{25}, 27→{26}; it is understandable that whether the priority scanning set of a logical sub-region is empty determines whether the logical sub-region begins scanning:
First, scan the logical sub-regions 19, 22, and 25 whose priority scanning sets are empty; when any of logical sub-regions 19, 22, or 25 finishes scanning, update the priority scanning sets of the related logical sub-regions; for example, after logical sub-region 19 is scanned, update the priority scanning sets of logical sub-regions 20 and 10 to be empty, and start scanning logical sub-regions 20 and 10, and so on, until all logical sub-regions are scanned.

Similarly, taking FIG. 6 as an example, according to the scanning order rules for logical sub-regions, the priority scanning sets for each logical sub-region are: 1→{10}, 2→{1, 10, 11}, 3→{2, 11}, 4→{11, 12}, 5→{4, 12}, 6→{5, 12, 13}, 7→{13, 14}, 8→{7, 14, 15}, 9→{8, 15}, 10→{16, 17}, 11→{10, 17, 18, 19}, 12→{11, 19, 20, 21}, 13→{21, 22}, 14→{13, 22, 23}, 15→{14, 23, 24}, 16→empty, 17→{16}, 18→{17}, 19→empty, 20→{19}, 21→{20}, 22→empty, 23→{22}, 24→{23}; it is understandable that whether a logical sub-region begins scanning is determined based on whether its priority scanning set is empty:
First, scan logical sub-regions 16, 19, and 22 whose priority scanning sets are empty;
When any of logical sub-regions 16, 19, or 22 finishes scanning, update the priority scanning sets of the related logical sub-regions; for example, after logical sub-region 16 is scanned, update the priority scanning set of logical sub-region 17 to be empty and the priority scanning set of logical sub-region 10 to {17}, and begin scanning logical sub-region 17; and so on, until all logical sub-regions are scanned.

It is understandable that using the technical solution provided by the present embodiment ensures that, in each scanning time period, all logical sub-regions are fully scanned in a counter-wind direction without overlapping interference along the upstream-downstream direction. Within the coverage of each logical sub-region, the scanning direction of each part's sintering plane is also opposite to the blowing direction, meaning that the scanning among parts within the forming area is also in the counter-wind direction. This avoids fumes and residues from upstream forming areas or logical sub-regions being blown onto downstream regions or sub-regions, thereby ensuring the forming quality of each forming area and each part therein. On the other hand, compared to the single-row laser scanning method shown in FIG. 1, the present embodiment shortens the waiting time of the lasers, thereby not only ensuring forming quality but also improving forming efficiency.

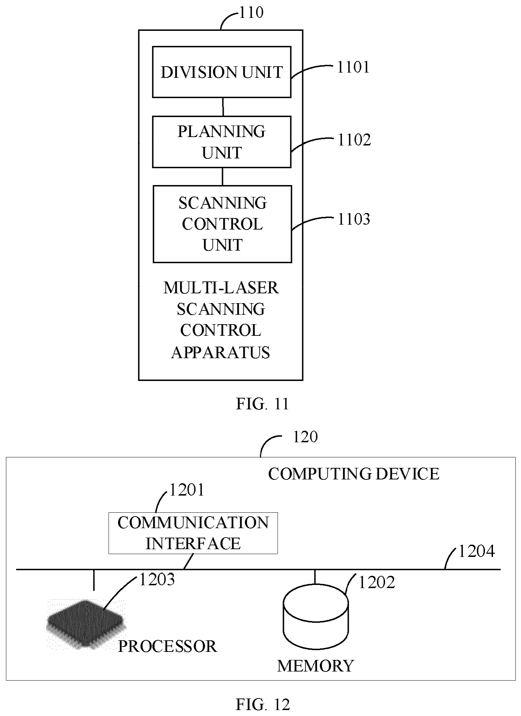

Based on the same inventive concept as the aforementioned technical solution, referring to FIG. 11, it illustrates the composition of a multi-laser scanning control apparatus 110 provided by the present embodiment. The multi-laser scanning control apparatus 110 includes a division unit 1101, a planning unit 1102, and a scanning control unit 1103, wherein:
The division unit 1101 is configured to divide, along a blowing direction, each forming area corresponding to one of a plurality of lasers into a plurality of logical sub-regions.

The planning unit 1102 is configured to plan a scanning order for the plurality of logical sub-regions within each forming area according to a predetermined scanning order determination rule.

The scanning control unit 1103 is configured to control each laser to sequentially scan the plurality of logical sub-regions within its corresponding forming area according to the scanning order until scanning of the forming areas corresponding to the plurality of lasers is completed.

In the above scheme, the planning unit 1102 is configured such that:
For the scanning order determination rule between multiple logical sub-regions within each laser:
Each logical sub-region contained in a laser may be sequentially or randomly numbered starting from any logical sub-region, and the scanning is performed sequentially according to the numbering in ascending or descending order;
For the scanning order determination rule between adjacent lasers:
   When there is no upwind-downwind relationship between the forming areas corresponding to adjacent lasers, no scanning order is set between the multiple logical sub-regions contained in the adjacent lasers;
   When there is an upwind-downwind relationship between the forming areas corresponding to adjacent lasers, the logical sub-regions located downwind are scanned before the logical sub-regions located upwind;
   For the scanning order determination rule within each logical sub-region:
      The scanning order of parts within each logical sub-region follows a counter-wind direction.

In the above scheme, the planning unit 1102 is further configured such that:
If the projections of the forming areas corresponding to two lasers along the blowing direction overlap and the forming areas are adjacent, an upwind-downwind relationship is determined between the forming areas;
If the projections of the forming areas corresponding to two lasers along the blowing direction overlap and the forming areas are not adjacent, no upwind-downwind relationship is determined between the forming areas;
If the projections of the forming areas corresponding to two lasers along the blowing direction do not overlap, no upwind-downwind relationship is determined between the forming areas.

In the above scheme, the planning unit 1102 is further configured to:
Obtain the priority scanning set for each logical sub-region according to the predetermined scanning order determination rules;
Plan the scanning order corresponding to each logical sub-region according to the corresponding priority scanning set: logical sub-regions with an empty priority scanning set are scanned first.

In the above scheme, the planning unit 1102 is further configured such that:
Each logical sub-region's priority scanning set is defined as the set of logical sub-regions that have been scanned before scanning the current logical sub-region.

In the above scheme, the scanning control unit 1103 is configured to:
Identify logical sub-regions whose priority scanning sets are empty among multiple logical sub-regions and control the lasers corresponding to these logical sub-regions to start scanning;
Remove scanned logical sub-regions from the priority scanning set to update it;
Continue to identify logical sub-regions with updated empty priority scanning sets among the logical sub-regions to be scanned, and control the corresponding lasers to scan them;
Repeat this process until scanning of all logical sub-regions is completed.

It is understandable that in this embodiment, the term "unit" may refer to a circuit portion, a processor portion, a program or software portion, etc., and it may also refer to a module, which may be modularized or non-modularized.

Additionally, the components in this embodiment may be integrated into a single processing unit, may exist separately as individual units, or two or more units may be integrated into one unit. The integrated unit may be implemented in hardware or as a software functional module.

If the integrated unit is implemented as a software functional module and is not sold or used as a standalone product, it may be stored on a computer-readable storage medium. Based on this understanding, the technical solution of this embodiment, in whole or in part, or the portion that contributes to the prior art, may be embodied as a software product. The computer software product stored on a storage medium includes multiple instructions configured to enable a computer device (which may be a personal computer, a server, or a network device, etc.) or a processor to execute all or part of the steps of the method described in this embodiment. The aforementioned storage media include USB drives, portable hard drives, read-only memory (Read-Only Memory, ROM), random-access memory (Random Access Memory, RAM), disks, optical disks, or other media capable of storing program code.

Therefore, this embodiment provides a computer storage medium, which stores a multi-laser scanning control program. When the multi-laser scanning control program is executed by at least one processor, it implements the multi-laser scanning control method steps described in the technical solution.

Referring to FIG. 12, the hardware structure of a computing device 120 capable of implementing the multi-laser scanning control device 110 is illustrated. The computing device 120 may be a wireless device, a mobile or cellular phone (including so-called smartphones), a personal digital assistant (PDA), a video game console (including video displays, mobile video game devices, mobile video conferencing units), a laptop, a desktop computer, a set-top box, a tablet computing device, an e-book reader, a fixed or mobile media player, etc. The computing device 120 includes a communication interface 1201, a memory 1202, and a processor 1203, all coupled via a bus system 1204. The bus system 1204 facilitates connection and communication among these components. For simplicity, all types of buses are labeled as bus system 1204 in FIG. 12, including the data bus, power bus, control bus, and status signal bus.

The communication interface 1201 is used for receiving and sending signals during information exchange with other external network elements;
The memory 1202 is used for storing computer programs executable on the processor 1203;
The processor 1203, when running the computer program, is configured to perform the following steps:
Divide, along a blowing direction, each forming area corresponding to one of a plurality of lasers into a plurality of logical sub-regions;
Plan a scanning order for the plurality of logical sub-regions within each forming area according to a predetermined scanning order determination rule;
Control each laser to sequentially scan the plurality of logical sub-regions within its corresponding forming area according to the scanning order until scanning of the forming areas corresponding to the plurality of lasers is completed.

It is understood that the memory 1202 may be volatile or non-volatile, or may include both types. Non-volatile memory may include ROM (Read-Only Memory, ROM), PROM (Programmable ROM, PROM), EPROM (Erasable PROM, EPROM), EEPROM (Electrically EPROM, EEPROM), or flash memory. Volatile memory may include RAM (Random Access Memory, RAM), used as external cache. Various types of RAMS may be used, such as SRAM (Static RAM, SRAM), DRAM (Dynamic RAM, DRAM), SDRAM (Synchronous DRAM, SDRAM), DDRSDRAM (Double Data Rate SDRAM, DDRSDRAM), ESDRAM (Enhanced SDRAM, ESDRAM), SLDRAM (Synchlink DRAM, SLDRAM), and DRRAM (Direct Rambus RAM, DRRAM).

The processor 1203 may be an integrated circuit chip with signal processing capabilities. In implementation, the steps of the method may be executed through integrated hardware logic circuits in the processor or via software instructions. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA), or other programmable logic devices, discrete gates or transistor logic devices, or discrete hardware components. Execution of the methods, steps, and logic diagrams disclosed in this embodiment may be implemented using these devices.

The embodiments described herein may be implemented in hardware, software, firmware, middleware, microcode, or any combination thereof. For hardware implementations, the processing units may be implemented using one or more ASICs, DSPs, DSP devices, programmable logic devices (PLD), FPGAs, general-purpose processors, controllers, microcontrollers, microprocessors, other electronic units configured to perform the functions described herein, or combinations thereof.

For software implementations, the functions described herein may be implemented by executing modules (e.g., procedures, functions) of the software. Software code may be stored in a memory and executed by a processor. The memory may be internal or external to the processor.

Specifically, the processor 1203 is further configured, when running the computer program, to perform the multi-laser scanning control method steps described above, which will not be repeated here.

The present disclosure provides a multi-laser scanning control method, apparatus, device, and computer storage medium. The forming areas corresponding to multiple lasers are divided into multiple logical sub-regions along a direction parallel to the blowing direction; then, according to a predetermined scanning order determination rule, the scanning order of each logical sub-region in the counterflow direction is planned, and the corresponding lasers are controlled to sequentially scan the logical sub-regions according to the obtained counterflow scanning order until the scanning of all forming areas corresponding to the lasers is completed. By planning the counter-wind scanning paths of multiple logical sub-regions, on one hand, it ensures fully counter-wind scanning among multiple lasers, avoiding mutual interference between upwind and downwind lasers during the forming process, thereby ensuring the quality of the fabricated parts; on the other hand, it reduces the waiting time of multiple lasers during the forming process, improving the forming efficiency.

It should be noted that, in the present embodiments, the technical solutions described may be combined arbitrarily, as long as there is no conflict.

The detailed description of the exemplary embodiments above is merely illustrative and not restrictive. Those skilled in the art should understand that various modifications and combinations of these embodiments or their features may be made without departing from the principles and spirit of the present disclosure, and such modifications should fall within the scope of the present disclosure.

## Claims

1. A method for controlling multi-laser scanning, comprising:
dividing, along a blowing direction, each forming area corresponding to one of a plurality of lasers into a plurality of logical sub-regions;
planning a scanning order for the plurality of logical sub-regions within each forming area according to a predetermined scanning order determination rule; and
controlling each laser to sequentially scan the plurality of logical sub-regions within its corresponding forming area according to the scanning order until scanning of the forming areas corresponding to the plurality of lasers is completed.

2. The method of claim 1, wherein the predetermined scanning order determination rule comprises:
a scanning order determination rule among the plurality of logical sub-regions within each laser, wherein each logical sub-region within a laser is sequentially or randomly numbered starting from any logical sub-region, and scanning is performed in numerical order in ascending or descending order;
a scanning order determination rule between adjacent lasers, wherein:
when there is no upwind-downwind relationship between forming areas corresponding to the adjacent lasers, no scanning order is set between the plurality of logical sub-regions contained in the adjacent lasers; and
when there is an upwind-downwind relationship between forming areas corresponding to the adjacent lasers, logical sub-regions located downwind are scanned prior to logical sub-regions located upwind; and
a scanning order determination rule within each logical sub-region, wherein the scanning order of parts within each logical sub-region follows a counter-wind direction.

3. The method of claim 2, wherein the upwind-downwind relationship between the forming areas comprises:
when projections of forming areas corresponding to two lasers along the blowing direction overlap and the forming areas are adjacent, an upwind-downwind relationship is determined between the forming areas;
when projections of forming areas corresponding to two lasers along the blowing direction overlap and the forming areas are not adjacent, no upwind-downwind relationship is determined between the forming areas; and
when projections of forming areas corresponding to two lasers along the blowing direction do not overlap, no upwind-downwind relationship is determined between the forming areas.

4. The method of claim 1, wherein planning the scanning order corresponding to each logical sub-region according to the predetermined scanning order determination rule comprises:
obtaining a priority scanning set for each logical sub-region according to the predetermined scanning order determination rule; and
planning the scanning order corresponding to each logical sub-region based on the corresponding priority scanning set, wherein logical sub-regions corresponding to an empty priority scanning set are scanned first.

5. The method of claim 4, wherein the priority scanning set of each logical sub-region is defined as a set of logical sub-regions that have been scanned before scanning the respective logical sub-region.

6. The method of claim 4, wherein controlling the corresponding lasers to sequentially scan the plurality of logical sub-regions according to the scanning order until scanning of the forming areas corresponding to all of the lasers is completed comprises:
identifying logical sub-regions whose priority scanning sets are empty among the plurality of logical sub-regions, and controlling the corresponding lasers to start scanning;
removing scanned logical sub-regions from the priority scanning set to update the set;
continuing to identify logical sub-regions corresponding to updated empty priority scanning sets among the logical sub-regions to be scanned, and controlling the corresponding lasers to scan them; and
repeating the above steps until scanning of all logical sub-regions is completed.

7. A multi-laser scanning control apparatus, comprising:
a division unit, configured to divide, along a blowing direction, each forming area corresponding to one of a plurality of lasers into a plurality of logical sub-regions;
a planning unit, configured to plan a scanning order for the plurality of logical sub-regions within each forming area according to a predetermined scanning order determination rule; and
a scanning control unit, configured to control each laser to sequentially scan the plurality of logical sub-regions within its corresponding forming area according to the scanning order until scanning of the forming areas corresponding to the plurality of lasers is completed.

8. The multi-laser scanning control apparatus of claim 7, wherein the scanning control unit is further configured to:
identify logical sub-regions whose priority scanning sets are empty among the plurality of logical sub-regions, and controlling the corresponding lasers to start scanning;
remove scanned logical sub-regions from the priority scanning set to update the set;
continue to identify logical sub-regions corresponding to updated empty priority scanning sets among the logical sub-regions to be scanned, and controlling the corresponding lasers to scan them; and
repeat the above steps until scanning of all logical sub-regions is completed.

9. A multi-laser scanning control device, comprising:
a communication interface, a memory, and a processor, wherein the components are coupled via a bus system;
the communication interface is configured to receive and send signals during information exchange with external network elements;
the memory is configured to store a computer program executable on the processor; and
the processor, when executing the computer program, performs the steps of the multi-laser scanning control method according to any of the claims 1 to 6.

10. A computer-readable storage medium, storing a multi-laser scanning control program, wherein when executed by at least one processor, the program causes the processor to perform the steps of the multi-laser scanning control method according to any of the claims 1 to 6.
